# EUROPEAN PATENT APPLICATION

(11) **EP 4 440 185 A1**
(43) Date of publication of application: **02.10.2024**
(21) Application number: 21964469.7
(22) Date of filing: 22.11.2021
(51) Int. Cl.: H04W 24/10

(54) **COMMUNICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2021/132154
(87) International publication number: WO 2023/087320

(57) **Abstract**

The embodiments of the present disclosure relate to the technical field of mobile communications. Provided are a communication method and apparatus, and a device and a storage medium, which can be applied to a wireless local area network sensing initiating station. The method comprises: determining a first message frame, wherein the first message frame comprises a sensing parameter domain, and a bandwidth sub-domain in the sensing parameter domain is used for indicating that a bearer bandwidth of a null data packet (NDP) frame corresponding to an initiating station to a responding station (I2R) is 320 MHz; and sending the first message frame. In the embodiments of the present disclosure, the wireless local area network sensing initiating station can indicate, in a wireless local area network sensing process, that the bearer bandwidth of the NDP frame corresponding to the I2R is 320 MHz, and same has high applicability.

## Description

### TECHNICAL FIELD

Embodiments of the present disclosure relate to the field of mobile communication technologies, and specifically, the embodiments of the present disclosure relate to a communication method and an apparatus, and a device and a storage medium.

### BACKGROUND

The wireless local area network (WLAN) has the characteristics of flexibility, mobility, and low cost. With the development of communication technologies and the growth of user requirements, research on the application of the WLAN is being gradually deepened. For example, WLAN sensing is currently researched, and the main application scenarios of the WLAN sensing are location discovery in dense environments (home and enterprise environments), proximity detection and presence detection, etc. The null data packet (NDP) frame corresponding to the initiator (initiating station, ISTA) for the WLAN sensing and the responder (responding station, RSTA) for the WLAN sensing may support bandwidths of 160 MHz, 80 MHz, 40 MHz, and 20 MHz, but whether other bandwidths are supported is inconclusive.

### SUMMARY

The embodiments of the present disclosure provide a communication method and an apparatus, and a device and a storage medium, which can enable the initiator and the responder to indicate, during a WLAN sensing process, that a bearer bandwidth of a corresponding NDP frame is 320 MHz.

In a first aspect, the embodiments of the present disclosure provide a communication method which may be applied to an initiator for wireless local area network (WLAN) sensing, and the method includes:
determining a first message frame, where the first message frame includes a sensing parameter field, and a bandwidth sub-field in the sensing parameter field is used for indicating that a bearer bandwidth of a null data packet (NDP) frame corresponding to the initiator to a responder (ISTA to RSTA, I2R) is 320 MHz; and
sending the first message frame.

In a second aspect, the embodiments of the present disclosure provide a communication method which may be applied to a responder for WLAN sensing, and the method includes:
determining a second message frame, where the second message frame includes a sensing parameter field, and a bandwidth sub-field in the sensing parameter field is used for indicating that a bearer bandwidth of a NDP frame corresponding to the responder to an initiator (RSTA to ISTA, R2I) is 320 MHz; and
sending the second message frame.

In a third aspect, the embodiments of the present disclosure also provide a communication device, and the device includes:
a first determining module, configured to determine a first message frame, where the first message frame includes a sensing parameter field, and a bandwidth sub-field in the sensing parameter field is used for indicating that a bearer bandwidth of a NDP frame corresponding to an I2R is 320 MHz; and
a first sending module, configured to send the first message frame.

In a fourth aspect, the embodiments of the present disclosure also provide a communication device, and the device includes:
a second determining module, configured to determine a second message frame, where the second message frame includes a sensing parameter field, and a bandwidth sub-field in the sensing parameter field is used for indicating that a bearer bandwidth of a NDP frame corresponding to an R2I is 320 MHz; and
a second sending module, configured to send the second message frame.

In a fifth aspect, the embodiments of the present disclosure also provide an initiator for WLAN sensing. The initiator includes a memory, a processor and a computer program stored in the memory and capable of being run on the processor. The processor, when executing the computer program, implements the communication method as provided in the first aspect of the embodiments of the present disclosure.

In a sixth aspect, the embodiments of the present disclosure also provide a responder for WLAN sensing. The responder includes a memory, a processor and a computer program stored in the memory and capable of being run on the processor. The processor, when executing the computer program, implements the communication method as provided in the second aspect of the embodiments of the present disclosure.

In a seventh aspect, the embodiments of the present disclosure also provide a computer-readable storage medium. The computer-readable storage medium stores a computer program, and the computer program, when executed by a processor, implements any communication method as provided in the embodiments of the present disclosure.

In the embodiments of the present disclosure, the initiator for WLAN sensing and the responder for WLAN sensing can indicate, during the WLAN sensing process, that the bearer bandwidth of the corresponding NDP frame is 320 MHz.

Additional aspects and advantages of the embodiments of the present disclosure will be given in part in the following description, which will become apparent from the following description or will be learned through the practice of the present disclosure.

### BRIEF DESCRIPTION OF THE DRAWINGS

In order to more clearly illustrate the technical solutions of the embodiments of the present disclosure, the accompanying drawings to be used in the description of the embodiments of the present disclosure will be briefly introduced below, and it is obvious that the accompanying drawings in the following description are only some of the embodiments of the present disclosure, and that other accompanying drawings may be obtained according to these drawings for those ordinary skilled in the art without contributing creative labor.
FIG. 1 is a flowchart of a communication method provided by an embodiment of the present disclosure;
FIG. 2 is another flowchart of a communication method provided by an embodiment of the present disclosure;
FIG. 3 is a schematic structural diagram of a communication device provided by an embodiment of the present disclosure;
FIG. 4 is another schematic structural diagram of a communication device provided by an embodiment of the present disclosure;
FIG. 5 is a schematic structural diagram of an initiator for WLAN sensing provided by an embodiment of the present disclosure;
FIG. 6 is a schematic structural diagram of a responder for WLAN sensing provided by an embodiment of the present disclosure.

### DETAILED DESCRIPTION

The term "and/or" in the embodiments of the present disclosure describes an association relationship of the associated objects, indicating that three relationships may exist, such as A and/or B, which may indicate the presence of A alone, the simultaneous presence of A and B, and the presence of B alone. The character "/" generally indicates an "or" relationship between the preceding and following associated objects.

The term "plurality" in the embodiments of the present disclosure refers to two or more, and other quantifiers are similar.

Exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the present invention. On the contrary, they are only examples of devices and methods consistent with some aspects of the present invention as detailed in the attached claims.

The terms used in the present disclosure are used solely for the purpose of describing particular embodiments, and are not intended to limit the present disclosure. The singular forms of "a", "the" and "this" used in the present disclosure and the appended claims are also intended to include the majority form, unless the context clearly indicates other meanings. It should also be understood that the term "and/or" as used in this article refers to and includes any or all possible combinations of one or more of the associated listed items.

It should be understood that although the terms first, second, third, etc. may be used in the present disclosure to describe various types of information, such information should not be limited to these terms. These terms are only used to distinguish the same type of information from one another. For example, without departing from the scope of the present disclosure, the first information may also be referred to as the second information, and similarly, the second information may also be referred to as the first information. Depending on the context, the phrase "if' as used herein may be interpreted as "at the time of......", "when ......", or "in response to determining".

The technical solutions in the embodiments of the present disclosure will be described clearly and completely in the following in conjunction with the accompanying drawings in the embodiments of the present disclosure, and it is obvious that the described embodiments are only part of the embodiments of the present disclosure, but not all of the embodiments. Based on the embodiments in the present disclosure, all other embodiments obtained by those ordinary skilled in the art without making creative labor fall within the scope of protection of the present disclosure.

In the embodiments of the present disclosure, the WLAN sensing process may be as follows: the initiator initiates the WLAN sensing (e.g., initiates a WLAN sensing session), and there may be a plurality of responders responding thereto.

In some embodiments, the initiator and the responder may include, but are not limited to, a cellular phone, a smart phone, a wearable device, a computer, a personal digital assistant (PDA), a personal communication system (PCS) device, a personal information manager (PIM), a personal navigation device (PND), a global positioning system (GPS), a multimedia device, or an Internet of Things (IoT) device, etc.

For example, a client as the initiator initiates the WLAN sensing, and a plurality of associated or unassociated responders (e.g., three access points, APs) for the WLAN sensing may respond. Here, "associated" may mean that an association connection for communication is established between the initiator and the responder, and "unassociated" may mean that the association connection for communication is not established between the initiator and the responder.

The AP is a wireless switch for a wireless network, and an access device of the wireless network. The AP may include a software application and/or a circuit, thereby enabling other types of nodes in the wireless network to communicate via the AP with the outside and inside of the wireless network. As an example, the AP may be a terminal device or a network device equipped with a wireless fidelity (Wi-Fi) chip.

In some embodiments, the plurality of responders may communicate with each other. For example, both the initiator and the responder may be clients, and the initiator and the responder may communicate through connecting to the same AP.

Although in the above description the client serves as the initiator and the AP serves as the responder, the present disclosure is not limited thereto, e.g., the AP may serve as the initiator, and the client may serve as the responder. Furthermore, there is no limitation on the number of the initiator and the number of the responder.

During the process of the sensing session establishment between the initiator and the responder, the initiator and the responder need to negotiate respective parameters related to the WLAN sensing. The embodiments of the present disclosure provide a communication method and an apparatus, and a device and a storage medium that are used for enabling the initiator and the responder to negotiate the bearer bandwidths of their respective corresponding NDP frames during the process.

In some embodiments, the methods and the devices are based on the same disclosure conception. Since the methods and the devices solve problems based on similar principles, the implementations of the devices and the methods can be referred to each other, and the repetitions will not be repeated.

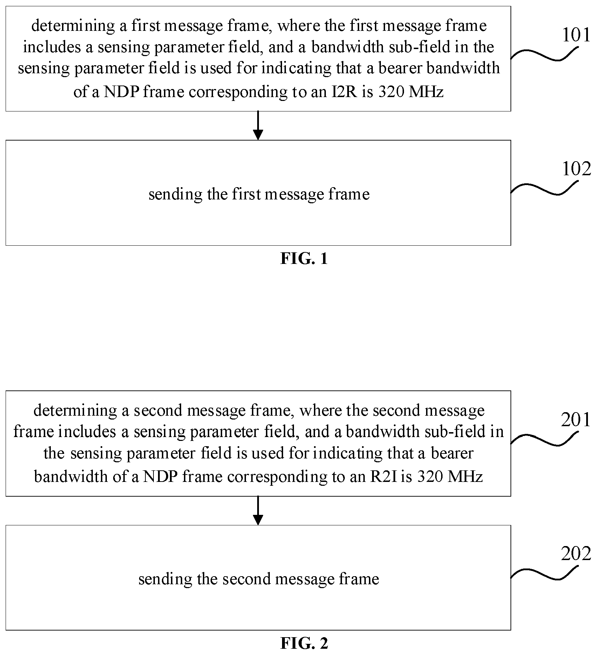

As shown in FIG. 1, the embodiments of the present disclosure provide a communication method. Optionally, the method may be applied to an initiator for WLAN sensing. The communication method shown in FIG. 1 may specifically include the following steps 101 to 102.

At step 101, a first message frame is determined, where the first message frame includes a sensing parameter field, and a bandwidth sub-field in the sensing parameter field is used for indicating that a bearer bandwidth of a NDP frame corresponding to the I2R is 320 MHz.

In an embodiment of the present disclosure, the first message frame includes the sensing parameter field that may be identified by 24 or more bits.

In the embodiments of the present disclosure, the sensing parameter field includes the bandwidth sub-field that may be identified by a plurality of bits.

As an example, the bandwidth sub-field may be identified by six bits in the sensing parameter field.

In some embodiments, the bandwidth sub-field in the sensing parameter field is used for indicating that the bearer bandwidth of the NDP frame corresponding to the I2R is 320 MHz.

Specifically, the bandwidth sub-field may be used for indicating that the bearer bandwidth of the NDP frame corresponding to the I2R is 320 MHz when the high efficient (HE) format and the extremely high throughput (EHT) format are supported.

In some embodiments, the bandwidth sub-field may indicate 160 MHz simultaneously through the first identification bit and the second identification bit, respectively, thereby indicating that the bearer bandwidth of the NDP frame corresponding to the I2R is 320 MHz through the first identification bit and the second identification bit.

At step 102, the first message frame is sent.

In an embodiment of the present disclosure, the initiator may send the first message frame to the responder to complete the negotiation of the WLAN sensing parameter.

In an optional embodiment, in the above step 101, the bandwidth sub-field in the sensing parameter field described above further includes at least one of:
an identification bit for indicating that the bearer bandwidth of the NDP frame corresponding to the I2R is 160 MHz;
an identification bit for indicating that the bearer bandwidth of the NDP frame corresponding to the I2R is 80 MHz;
an identification bit for indicating that the bearer bandwidth of the NDP frame corresponding to the I2R is 40 MHz; or
an identification bit for indicating that the bearer bandwidth of the NDP frame corresponding to the I2R is 20 MHz.

Specifically, the bandwidth sub-field in the sensing parameter field, through different identification bits, may further indicate at least one of:
the bearer bandwidth of the NDP frame corresponding to the I2R being 160 MHz when the HE format and the EHT format are supported;
the bearer bandwidth of the NDP frame corresponding to the I2R being 80 MHz when the HE format, the EHT format and the very high throughput (VHT) format are supported;
the bearer bandwidth of the NDP frame corresponding to the I2R being 40 MHz when the HE format, the EHT format and the VHT format are supported; or
the bearer bandwidth of the NDP frame corresponding to the I2R being 20 MHz when the HE format, the EHT format and the VHT format are supported.

In some embodiments, the bandwidth sub-field may indicate 80 MHz simultaneously through the third identification bit and the fourth identification bit, respectively, thereby indicating that the bearer bandwidth of the NDP frame corresponding to the I2R is 160 MHz through the third identification bit and the fourth identification bit.

In some embodiments, HE corresponds to the 802.11n standard protocol, VHT corresponds to the 802.11ac standard protocol, and EHT corresponds to the 802.11be standard protocol. That is, the bandwidth sub-field may be used for indicating the possible bearer bandwidth of the NDP frame corresponding to the I2R when the initiator supports different standard protocols.

In some embodiments, when the bandwidth sub-field indicates any of the above-mentioned bearer bandwidths through the corresponding identification bit, the corresponding identification bits correspond to different field values, and the field value of the identification bit corresponding to any of the above-mentioned bearer bandwidths is not limited herein. As shown in Table 1:

**Table 1: bandwidth sub-field format**

| Field value | Format | NDP format |
|---|---|---|
| 0 | HE/EHT/VHT | 20 |
| 1 | HE/EHT/VHT | 40 |
| 2 | HE/EHT/VHT | 80 |
| 3 | HE/EHT | 160/80+80 |
| 4 | EHT | 320/160+160 |
| 5-127 reserved | | |

Herein, the Format column indicates the supported format of the NDP frame, the NDP format column indicates the bearer bandwidth of the NDP frame, and the Field value identifies the field value.

In Table 1, when the NDP frame corresponding to the I2R supports the HE format and the EHT format, and the bearer bandwidth is 320 MHz, the corresponding field value is 4; when the NDP frame corresponding to the I2R supports the HE format and the EHT format, and the bearer bandwidth is 160 MHz, the corresponding field value is 3; when the NDP frame corresponding to the I2R supports the HE format, the EHT format and the VHT format, and the bearer bandwidth is 80 MHz, the corresponding field value is 2; when the NDP frame corresponding to the I2R supports the HE format, the EHT format and the VHT format, and the bearer bandwidth is 40 MHz, the corresponding field value is 1; when the NDP frame corresponding to the I2R supports the HE format, the EHT format and the VHT format, and the bearer bandwidth is 20 MHz, the corresponding field value is 0; and other field values are used as reserved field values to identify other information.

It should be illustrated that the above bandwidth sub-field may include any one or more of the above identification bits to indicate the bearer bandwidth of the NDP frame corresponding to the I2R.

As an example, in an optional embodiment, the bandwidth sub-field in the above sensing parameter field further includes an identification bit for indicating that the bearer bandwidth of the NDP frame corresponding to the I2R is 160 MHz.

As an example, in an optional embodiment, the bandwidth sub-field in the above sensing parameter field further includes an identification bit for indicating that the bearer bandwidth of the NDP frame corresponding to the I2R is 80 MHz.

As an example, in an optional embodiment, the bandwidth sub-field in the above sensing parameter field further includes an identification bit for indicating that the bearer bandwidth of the NDP frame corresponding to the I2R is 40 MHz, and an identification bit for indicating that the bearer bandwidth of the NDP frame corresponding to the I2R is 20 MHz.

In an optional embodiment, in the above step 101, the above sensing parameter field includes an I2R repetition sub-field, and the I2R repetition sub-field is used for indicating a maximum number of a long training field (LFT) that is included in the NDP frame corresponding to the I2R.

In some embodiments, the I2R repetition sub-field may indicate, through four or more bits, the maximum number of the long training field (LFT) that is included in the NDP frame corresponding to the I2R.

In some embodiments, a field value corresponding to the I2R repetition sub-field may indicate the maximum number of the long training field (LFT) included in the NDP frame corresponding to the I2R.

In an optional embodiment, in the above step 101, the above sensing parameter field includes at least one of:
an identification bit for indicating a maximum number of a spatial stream (SS) used by the NDP frame corresponding to the I2R with a bandwidth less than 80 MHz, and an identification bit for indicating a maximum number of the SS used by the NDP frame corresponding to the I2R with the bandwidth greater than or equal to 80 MHz;
an identification bit for indicating a maximum number of an SS used by the NDP frame corresponding to the I2R with a bandwidth less than 80 MHz, an identification bit for indicating a maximum number of the SS used by the NDP frame corresponding to the I2R with the bandwidth greater than or equal to 80 MHz, and an identification bit for indicating a maximum number of the SS used by the NDP frame corresponding to the I2R with the bandwidth greater than or equal to 160 MHz; or
an identification bit for indicating a maximum number of an SS and a maximum number of a space time stream (STS) used by the NDP frame corresponding to the I2R with a bandwidth less than 80 MHz, and an identification bit for indicating a maximum number of the SS and a maximum number of the STS used by the NDP frame corresponding to the I2R with the bandwidth greater than or equal to 80 MHz.

That is, the sensing parameter field may indicate, in the case where 80 MHz is the limit, the maximum number of the SS used by the NDP frame corresponding to the I2R when the bandwidth is less than 80 MHz, and is greater than or equal to 80 MHz; the sensing parameter field may also indicate, in the case where 80 MHz and 160 MHz are the limit, the maximum number of the SS used by the NDP frame corresponding to the I2R when the bandwidth is less than 80 MHz, greater than or equal to 80 MHz, and greater than or equal to 160 MHz; and the sensing parameter field may also indicate, in the case where 80 MHz is the limit, the maximum number of the SS and the maximum number of the STS used by the NDP frame corresponding to the I2R when the bandwidth is less than 80 MHz, and is greater than or equal to 80 MHz.

In an optional embodiment, in the above step 101, the sensing parameter field may also indicate, when 20 MHz or 40 MHz is the limit, a maximum number of the SS used in different bandwidth ranges by the NDP frame corresponding to the I2R.

In an optional embodiment, in the above step 101, the first message frame includes a WLAN sensing parameter information element (IE), and the sensing parameter field is carried in the WLAN sensing parameter IE.

In some embodiments, the WLAN sensing parameter IE in the first message frame includes respective parameters corresponding to the I2R.

In an optional embodiment, in the above step 101, the first message frame includes the WLAN sensing parameter IE, and the sensing parameter field is carried in the WLAN sensing parameter IE.

In some embodiments, the WLAN sensing parameter IE includes at least one of:
a sub-IE field for indicating an identification of the WLAN sensing parameter IE;
a sub-IE field for indicating a length of the WLAN sensing parameter IE;
a sub-IE field for indicating that the WLAN sensing parameter IE includes a parameter required for a triggered-based (TB) sensing mode or a parameter required for a non-triggered-based (Non-TB) sensing mode; or
a sub-IE field for indicating a parameter required for a TB sensing mode or a parameter required for a Non-TB sensing mode.

The details can be shown in Table 2:

**Table 2: WLAN sensing parameter IE format**

| | | | | |
|---|---|---|---|---|
| Element ID | Length | Element ID extension | WLAN sensing parameters | Sensing subelement |

In some embodiments, the sub-IE field of Element ID is used for indicating the identification of the WLAN sensing parameter IE; the sub-IE field of Length is used for indicating the length of the WLAN sensing parameter IE; the sub-IE field of Element ID extension is used for indicating that the WLAN sensing parameter IE includes the parameter required for the TB sensing mode or the parameter required for the Non-TB sensing mode; and the sub-IE field of Sensing subelement is used for indicating the parameter required for the TB sensing mode or the parameter required for the Non-TB sensing mode.

In some embodiments, the sub-IE field of WLAN sensing parameters is the aforementioned sensing parameter field.

In some embodiments, the WLAN sensing parameter IE, when including the parameter required for the TB sensing mode, indicates the included parameter required for the TB sensing mode through the corresponding sub-IE field; and the WLAN sensing parameter IE, when including the parameter required for the Non-TB sensing mode, indicates the included parameter required for the Non-TB sensing mode through the corresponding sub-IE field.

It should be particularly illustrated that any sub-IE field or any combination of the above multiple sub-IE fields may be carried, as the sub-IE field in an independent embodiment, in the WLAN sensing parameter IE.

As an example, in an optional embodiment, the first message frame includes the WLAN sensing parameter IE, and the WLAN sensing parameter IE includes the sub-IE field for indicating the identification of the WLAN sensing parameter IE.

As an example, in an optional embodiment, the first message frame includes the WLAN sensing parameter IE, and the WLAN sensing parameter IE includes the sub-IE field for indicating the length of the WLAN sensing parameter IE.

As an example, in an optional embodiment, the first message frame includes the WLAN sensing parameter IE, and the WLAN sensing parameter IE includes the sub-IE field for indicating that the WLAN sensing parameter IE includes the parameter required for the TB sensing mode.

As an example, in an optional embodiment, the first message frame includes the WLAN sensing parameter IE, and the WLAN sensing parameter IE includes the sub-IE field for indicating that the WLAN sensing parameter IE includes the parameter required for the Non-TB sensing mode.

As an example, in an optional embodiment, the first message frame includes the WLAN sensing parameter IE, and the WLAN sensing parameter IE includes the sub-IE field for indicating the parameter required for the TB sensing mode.

As an example, in an optional embodiment, the first message frame includes the WLAN sensing parameter IE, and the WLAN sensing parameter IE includes the sub-IE field for indicating the parameter required for the Non-TB sensing mode.

In an optional embodiment, in the above step 101, the above first message frame may be any of the message frames sent by the initiator during the process of the sensing session establishment between the initiator and the responder.

As an example, the first message frame is a WLAN sensing request frame.

As shown in FIG. 2, the embodiments of the present disclosure provide a communication method. Optionally, the method may be applied to a responder for WLAN sensing. The communication method shown in FIG. 2 may specifically include the following steps 201 to 202.

At step 201, a second message frame is determined, where the second message frame includes a sensing parameter field, and a bandwidth sub-field in the sensing parameter field is used for indicating that a bearer bandwidth of a NDP frame corresponding to the R2I is 320 MHz.

In an embodiment of the present disclosure, the second message frame includes the sensing parameter field that may be identified by 24 or more bits.

In the embodiments of the present disclosure, the sensing parameter field in the second message frame likewise includes the bandwidth sub-field that may be identified by a plurality of bits, e.g., 6 bits in the sensing parameter field may be used to identify the bandwidth sub-field.

In some embodiments, the bandwidth sub-field in the sensing parameter field of the second message frame is used for indicating that the bearer bandwidth of the NDP frame corresponding to the R2I is 320 MHz.

Specifically, the bandwidth sub-field in the sensing parameter field of the second message frame may be used for indicating that the bearer bandwidth of the NDP frame corresponding to the R2I is 320 MHz when the HE format and the EHT format are supported.

In some embodiments, the bandwidth sub-field in the second message frame may indicate 160 MHz simultaneously through different identification bits, respectively, thereby indicating that the bearer bandwidth of the NDP frame corresponding to the R2I is 320 MHz.

At step 202, the second message frame is sent.

In an embodiment of the present disclosure, the responder may send the second message frame to the initiator to complete the negotiation of the WLAN sensing parameter.

In an optional embodiment, in the above step 201, the bandwidth sub-field in second message frame further includes at least one of:
an identification bit for indicating that the bearer bandwidth of the NDP frame corresponding to the R2I is 160 MHz;
an identification bit for indicating that the bearer bandwidth of the NDP frame corresponding to the R2I is 80 MHz;
an identification bit for indicating that the bearer bandwidth of the NDP frame corresponding to the R2I is 40 MHz; or
an identification bit for indicating that the bearer bandwidth of the NDP frame corresponding to the R2I is 20 MHz.

Specifically, the bandwidth sub-field in the second message frame, through different identification bits, may further indicate at least one of:
the bearer bandwidth of the NDP frame corresponding to the R2I being 160 MHz when the HE format and the EHT format are supported;
the bearer bandwidth of the NDP frame corresponding to the R2I being 80 MHz when the HE format, the EHT format and the VHT format are supported;
the bearer bandwidth of the NDP frame corresponding to the R2I being 40 MHz when the HE format, the EHT format and the VHT format are supported; or
the bearer bandwidth of the NDP frame corresponding to the R2I being 20 MHz when the HE format, the EHT format and the VHT format are supported.

In some embodiments, the bandwidth sub-field in the second message frame may indicate 80 MHz simultaneously through different identification bits, respectively, thereby indicating that the bearer bandwidth of the NDP frame corresponding to the R2I is 160 MHz.

In some embodiments, when the bandwidth sub-field in the second message frame indicates any of the above-mentioned bearer bandwidths through the corresponding identification bit, the corresponding identification bits correspond to different field values, and the field value of the identification bit corresponding to any of the above-mentioned bearer bandwidths is not limited herein. The specific format of the bandwidth sub-field in the second message frame is similar to the format of the bandwidth sub-field in the first message frame shown in Table 1, and is not repeated herein.

It should be illustrated that the bandwidth sub-field in the second message frame may include any one or more of the above-described identification bits to indicate the bearer bandwidth of the NDP frame corresponding to the R2I.

As an example, in an optional embodiment, the bandwidth sub-field in the above sensing parameter field further includes an identification bit for indicating that the bearer bandwidth of the NDP frame corresponding to the R2I is 160 MHz.

As an example, in an optional embodiment, the bandwidth sub-field in the above sensing parameter field further includes an identification bit for indicating that the bearer bandwidth of the NDP frame corresponding to the R2I is 80 MHz.

As an example, in an optional embodiment, the bandwidth sub-field in the above sensing parameter field further includes an identification bit for indicating that the bearer bandwidth of the NDP frame corresponding to the R2I is 40 MHz, and an identification bit for indicating that the bearer bandwidth of the NDP frame corresponding to the R2I is 20 MHz.

In an optional embodiment, in the above step 201, the sensing parameter field in the second message frame may further include an R2I repetition sub-field, and the R2I repetition sub-field is used for indicating a maximum number of a long training field (LFT) that is included in the NDP frame corresponding to the R2I.

In some embodiments, the R2I repetition sub-field may indicate, through four or more bits, the maximum number of the long training field (LFT) that is included in the NDP frame corresponding to the R2I.

In some embodiments, a field value corresponding to the R2I repetition sub-field may indicate the maximum number of the long training field (LFT) included in the NDP frame corresponding to the R2I.

In an optional embodiment, in the above step 201, the sensing parameter field in the second message frame may further include at least one of:
an identification bit for indicating a maximum number of an SS used by the NDP frame corresponding to the R2I with a bandwidth less than 80 MHz, and an identification bit for indicating a maximum number of the SS used by the NDP frame corresponding to the R2I with the bandwidth greater than or equal to 80 MHz;
an identification bit for indicating a maximum number of an SS used by the NDP frame corresponding to the R2I with a bandwidth less than 80 MHz, an identification bit for indicating a maximum number of the SS used by the NDP frame corresponding to the R2I with the bandwidth greater than or equal to 80 MHz, and an identification bit for indicating a maximum number of the SS used by the NDP frame corresponding to the R2I with the bandwidth greater than or equal to 160 MHz; or
an identification bit for indicating a maximum number of an SS and a maximum number of an STS used by the NDP frame corresponding to the R2I with a bandwidth less than 80 MHz, and an identification bit for indicating a maximum number of the SS and a maximum number of the STS used by the NDP frame corresponding to the R2I with the bandwidth greater than or equal to 80 MHz.

That is, the sensing parameter field in the second message frame may likewise indicate, in the case where 80 MHz is the limit, the maximum number of the SS used by the NDP frame corresponding to the R2I when the bandwidth is less than 80 MHz, and is greater than or equal to 80 MHz; the sensing parameter field in the second message frame may also indicate, in the case where 80 MHz and 160 MHz are the limit, the maximum number of the SS used by the NDP frame corresponding to the R2I when the bandwidth is less than 80 MHz, greater than or equal to 80 MHz, and greater than or equal to 160 MHz; and the sensing parameter field in the second message frame may also indicate, in the case where 80 MHz is the limit, the maximum number of the SS and the maximum number of the STS used by the NDP frame corresponding to the R2I when the bandwidth is less than 80 MHz, and is greater than or equal to 80 MHz.

In an optional embodiment, in the above step 201, the sensing parameter field in the second message frame may also likewise indicate, when 20 MHz or 40 MHz is the limit, a maximum number of the SS used in different bandwidth ranges by the NDP frame corresponding to the R2I.

In an optional embodiment, in the above step 201, the second message frame likewise includes a WLAN sensing parameter IE, and the sensing parameter field is carried in the WLAN sensing parameter IE.

In some embodiments, the WLAN sensing parameter IE in the second message frame includes respective parameters corresponding to the R2I.

In an optional embodiment, in the above step 201, the second message frame likewise includes the WLAN sensing parameter IE, and the sensing parameter field is carried in the WLAN sensing parameter IE.

In some embodiments, the WLAN sensing parameter IE in the second message frame may further include at least one of:
a sub-IE field for indicating an identification of the WLAN sensing parameter IE;
a sub-IE field for indicating a length of the WLAN sensing parameter IE;
a sub-IE field for indicating that the WLAN sensing parameter IE includes a parameter required for a TB sensing mode or a parameter required for a Non-TB sensing mode; or
a sub-IE field for indicating a parameter required for a TB sensing mode or a parameter required for a Non-TB sensing mode.

Herein, the format of the WLAN sensing parameter IE in the second message frame is similar to the format of the WLAN sensing parameter IE in the first message frame in Table 2, and is not repeated herein.

In some embodiments, the WLAN sensing parameter IE in the second message frame, when including the parameter required for the TB sensing mode, indicates the included parameter required for the TB sensing mode through the corresponding sub-IE field; and the WLAN sensing parameter IE in the second message frame, when including the parameter required for the Non-TB sensing mode, indicates the included parameter required for the Non-TB sensing mode through the corresponding sub-IE field.

It should be particularly illustrated that any sub-IE field or any combination of the above multiple sub-IE fields may be carried, as the sub-IE field in an independent embodiment, in the WLAN sensing parameter IE of the second message frame.

As an example, in an optional embodiment, the second message frame includes the WLAN sensing parameter IE, and the WLAN sensing parameter IE includes the sub-IE field for indicating the identification of the WLAN sensing parameter IE.

As an example, in an optional embodiment, the second message frame includes the WLAN sensing parameter IE, and the WLAN sensing parameter IE includes the sub-IE field for indicating the length of the WLAN sensing parameter IE.

As an example, in an optional embodiment, the second message frame includes the WLAN sensing parameter IE, and the WLAN sensing parameter IE includes the sub-IE field for indicating that the WLAN sensing parameter IE includes the parameter required for the TB sensing mode.

As an example, in an optional embodiment, the second message frame includes the WLAN sensing parameter IE, and the WLAN sensing parameter IE includes the sub-IE field for indicating that the WLAN sensing parameter IE includes the parameter required for the Non-TB sensing mode.

As an example, in an optional embodiment, the second message frame includes the WLAN sensing parameter IE, and the WLAN sensing parameter IE includes the sub-IE field for indicating the parameter required for the TB sensing mode.

As an example, in an optional embodiment, the second message frame includes the WLAN sensing parameter IE, and the WLAN sensing parameter IE includes the sub-IE field for indicating the parameter required for the Non-TB sensing mode.

In an optional embodiment, in the above step 201, the second message frame may be any of the message frames sent by the responder during the process of the sensing session establishment between the initiator and the responder.

As an example, the second message frame is a WLAN sensing response frame.

Based on the communication method provided by the embodiments of the present disclosure, a parameter format of the WLAN sensing parameter IE and respective parameters indicated by the WLAN sensing parameter IE may be provided for the initiator and the responder during the process of the sensing session establishment; and based on the WLAN sensing parameter IE, the negotiation of the WLAN sensing related parameters (such as the bearer bandwidth of the NDP frame corresponding to each of the initiator and the responder, etc.) can be completed during the process of the sensing session establishment, which is highly applicable.

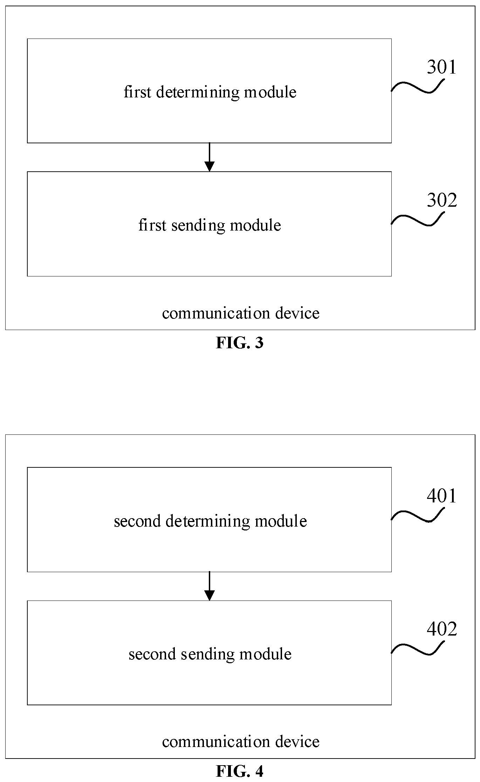

As shown in FIG. 3, the embodiments of the present disclosure provide a communication device. The device includes:
a first determining module 301, configured to determine a first message frame, where the first message frame includes a sensing parameter field, and a bandwidth sub-field in the sensing parameter field is used for indicating that a bearer bandwidth of a NDP frame corresponding to an I2R is 320 MHz; and
a first sending module 302, configured to send the first message frame.

Optionally, in an embodiment of the present disclosure, the bandwidth sub-field further includes at least one of:
an identification bit for indicating that the bearer bandwidth of the NDP frame corresponding to the I2R is 160 MHz;
an identification bit for indicating that the bearer bandwidth of the NDP frame corresponding to the I2R is 80 MHz;
an identification bit for indicating that the bearer bandwidth of the NDP frame corresponding to the I2R is 40 MHz; or
an identification bit for indicating that the bearer bandwidth of the NDP frame corresponding to the I2R is 20 MHz.

Optionally, in an embodiment of the present disclosure, the sensing parameter field further includes an I2R repetition sub-field, and the I2R repetition sub-field is used for indicating a maximum number of a long training field (LFT) included in the NDP frame corresponding to the I2R.

Optionally, in an embodiment of the present disclosure, the sensing parameter field further includes at least one of:
an identification bit for indicating a maximum number of an SS used by the NDP frame corresponding to the I2R with a bandwidth less than 80 MHz, and an identification bit for indicating a maximum number of the SS used by the NDP frame corresponding to the I2R with the bandwidth greater than or equal to 80 MHz;
an identification bit for indicating a maximum number of an SS used by the NDP frame corresponding to the I2R with a bandwidth less than 80 MHz, an identification bit for indicating a maximum number of the SS used by the NDP frame corresponding to the I2R with the bandwidth greater than or equal to 80 MHz, and an identification bit for indicating a maximum number of the SS used by the NDP frame corresponding to the I2R with the bandwidth greater than or equal to 160 MHz; or
an identification bit for indicating a maximum number of an SS and a maximum number of an STS used by the NDP frame corresponding to the I2R with a bandwidth less than 80 MHz, and an identification bit for indicating a maximum number of the SS and a maximum number of the STS used by the NDP frame corresponding to the I2R with the bandwidth greater than or equal to 80 MHz.

Optionally, in an embodiment of the present disclosure, the first message frame includes a WLAN sensing parameter IE, the WLAN sensing parameter IE includes the sensing parameter field; and the WLAN sensing parameter IE further includes at least one of:
a sub-IE field for indicating an identification of the WLAN sensing parameter IE;
a sub-IE field for indicating a length of the WLAN sensing parameter IE;
a sub-IE field for indicating that the WLAN sensing parameter IE includes a parameter required for a TB sensing mode or a parameter required for a Non-TB sensing mode; or
a sub-IE field for indicating a parameter required for a TB sensing mode or a parameter required for a Non-TB sensing mode.

Optionally, in an embodiment of the present disclosure, the first message frame is a WLAN sensing request frame.

As shown in FIG. 4, the embodiments of the present disclosure provide a communication device. The device includes:
a second determining module 401, configured to determine a second message frame, where the second message frame includes a sensing parameter field, and a bandwidth sub-field in the sensing parameter field is used for indicating that a bearer bandwidth of a NDP frame corresponding to an R2I is 320 MHz; and
a second sending module 402, configured to send the second message frame.

Optionally, in an embodiment of the present disclosure, the bandwidth sub-field further includes at least one of:
an identification bit for indicating that the bearer bandwidth of the NDP frame corresponding to the R2I is 160 MHz;
an identification bit for indicating that the bearer bandwidth of the NDP frame corresponding to the R2I is 80 MHz;
an identification bit for indicating that the bearer bandwidth of the NDP frame corresponding to the R2I is 40 MHz; or
an identification bit for indicating that the bearer bandwidth of the NDP frame corresponding to the R2I is 20 MHz.

Optionally, in an embodiment of the present disclosure, the sensing parameter field further includes an R2I repetition sub-field, and the R2I repetition sub-field is used for indicating a maximum number of a long training field (LFT) included in the NDP frame corresponding to the R2I.

Optionally, in an embodiment of the present disclosure, the sensing parameter field further includes at least one of:
an identification bit for indicating a maximum number of an SS used by the NDP frame corresponding to the R2I with a bandwidth less than 80 MHz, and an identification bit for indicating a maximum number of the SS used by the NDP frame corresponding to the R2I with the bandwidth greater than or equal to 80 MHz;
an identification bit for indicating a maximum number of an SS used by the NDP frame corresponding to the R2I with a bandwidth less than 80 MHz, an identification bit for indicating a maximum number of the SS used by the NDP frame corresponding to the R2I with the bandwidth greater than or equal to 80 MHz, and an identification bit for indicating a maximum number of the SS used by the NDP frame corresponding to the R2I with the bandwidth greater than or equal to 160 MHz; or
an identification bit for indicating a maximum number of an SS and a maximum number of an STS used by the NDP frame corresponding to the R2I with a bandwidth less than 80 MHz, and an identification bit for indicating a maximum number of the SS and a maximum number of the STS used by the NDP frame corresponding to the R2I with the bandwidth greater than or equal to 80 MHz.

Optionally, in an embodiment of the present disclosure, the second message frame includes a WLAN sensing parameter IE, the WLAN sensing parameter IE includes the sensing parameter field; and the WLAN sensing parameter IE further includes at least one of:
a sub-IE field for indicating an identification of the WLAN sensing parameter IE;
a sub-IE field for indicating a length of the WLAN sensing parameter IE;
a sub-IE field for indicating that the WLAN sensing parameter IE includes a parameter required for a TB sensing mode or a parameter required for a Non-TB sensing mode; or
a sub-IE field for indicating a parameter required for a TB sensing mode or a parameter required for a Non-TB sensing mode.

Optionally, in an embodiment of the present disclosure, the second message frame is a WLAN sensing response frame.

Based on the communication device provided by the embodiments of the present disclosure, a parameter format of the WLAN sensing parameter IE and respective parameters indicated by the WLAN sensing parameter IE may be provided for the initiator and the responder during the process of the sensing session establishment; and based on the WLAN sensing parameter IE, the negotiation of the WLAN sensing related parameters (such as the bearer bandwidth of the NDP frame corresponding to each of the initiator and the responder, etc.) can be completed during the process of the sensing session establishment, which is highly applicable.

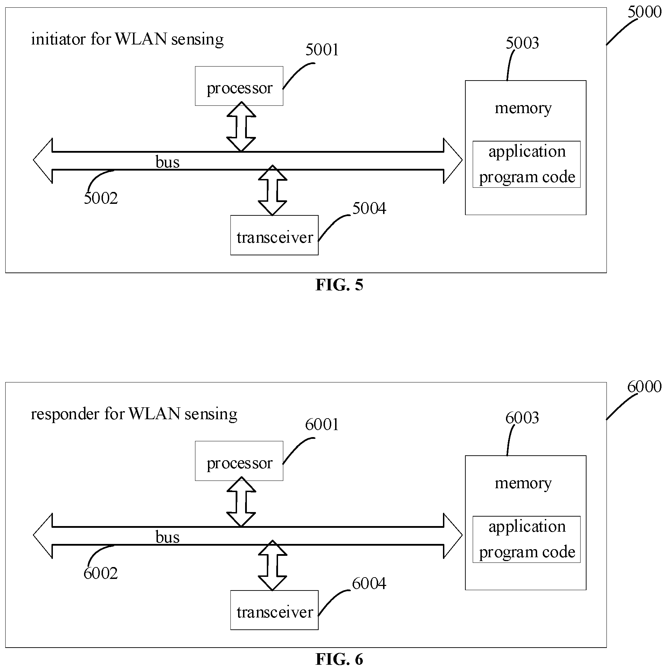

The embodiments of the present disclosure also provide an initiator for WLAN sensing, as shown in FIG. 5. The initiator 5000 for WLAN sensing shown in FIG. 5 may be a server and includes a processor 5001 and a memory 5003. In some embodiments, the processor 5001 and the memory 5003 are connected, e.g., via a bus 5002. Optionally, the initiator 5000 for WLAN sensing may further include a transceiver 5004. It should be illustrated that the transceiver 5004 in the practical application is not limited to one, and the structure of the initiator 5000 for WLAN sensing does not constitute a limitation on the embodiments of the present disclosure.

The memory 5003 is used for storing application program code that is used for executing the embodiments of the present disclosure and is controlled for execution by the processor 5001. The processor 5001 is used for executing the application program code stored in the memory 5003 to implement the communication method applicable to the initiator for WLAN sensing in this solution.

The embodiments of the present disclosure also provide an initiator for WLAN sensing, as shown in FIG. 5. The initiator 5000 for WLAN sensing shown in FIG. 5 may be a server and includes a processor 5001 and a memory 5003. In some embodiments, the processor 5001 and the memory 5003 are connected, e.g., via a bus 5002. Optionally, the initiator 5000 for WLAN sensing may further include a transceiver 5004. It should be illustrated that the transceiver 5004 in the practical application is not limited to one, and the structure of the initiator 5000 for WLAN sensing does not constitute a limitation on the embodiments of the present disclosure.

The memory 5003 is used for storing application program code that is used for executing the embodiments of the present disclosure and is controlled for execution by the processor 5001. The processor 5001 is used for executing the application program code stored in the memory 5003 to implement the communication method applicable to the initiator for WLAN sensing in FIG. 1.

The embodiments of the present disclosure also provide a responder for WLAN sensing, as shown in FIG. 6. The responder 6000 for WLAN sensing shown in FIG. 6 may be a server and includes a processor 6001 and a memory 6003. In some embodiments, the processor 6001 and the memory 6003 are connected, e.g., via a bus 6002. Optionally, the responder 6000 for WLAN sensing may further include a transceiver 6004. It should be illustrated that the transceiver 6004 in the practical application is not limited to one, and the structure of the responder 6000 for WLAN sensing does not constitute a limitation on the embodiments of the present disclosure.

The memory 6003 is used for storing application program code that is used for executing the embodiments of the present disclosure and is controlled for execution by the processor 6001. The processor 6001 is used for executing the application program code stored in the memory 6003 to implement the communication method applicable to the responder for WLAN sensing in FIG. 2.

In some embodiments, the processor 5001 and the processor 6001 may be a central processing unit (CPU), a general purpose processor, a digital signal processor (DSP), an application specific integrated circuit (ASIC), a field programmable gate array (FPGA), or other programmable logic device, transistor logic device, hardware component, or any combination thereof, which may implement or execute various exemplary logic blocks, modules, and circuits described in conjunction with the disclosed contents in the present disclosure. The processor 5001 and the processor 6001 may also be a combination that implements computing functions, such as a combination including one or more microprocessors, a combination of a DSP and a microprocessor, and the like.

The bus 5002 and the bus 6002 may include a pathway to transfer information between the aforementioned components. The bus 5002 and the bus 6002 may be a peripheral component interconnect (PCI) bus or an extended industry standard architecture (EISA) bus, etc. The bus 5002 and the bus 6002 may be classified as an address bus, a data bus, a control bus, and the like. For ease of representation, the bus is only represented by one bold line in FIGS. 5 and 6, but this does not indicate that there is only one bus or one type of bus.

The memory 5003 and the memory 6003 may be a read only memory (ROM) or other types of static storage devices that can store static information and instructions; the memory 5003 and the memory 6003 may be a random access memory (RAM) or other types of dynamic storage devices that can store information and instructions; the memory 5003 and the memory 6003 may also be an electrically erasable programmable read only memory (EEPROM), a compact disc read only memory (CD-ROM), or other compact disc storage, optical disc storage (including compressed optical discs, laser discs, optical discs, digital versatile discs, Blu-ray discs, etc.), disk storage media or other magnetic storage devices, or any other media capable of being used to carry or store desired program code in the form of instructions or data structures and capable of being accessed by a computer, but not limited to this.

The embodiments of the present disclosure provide a computer-readable storage medium, and the computer-readable storage medium stores a computer program. The computer program, when run on a computer, enables the computer to execute the corresponding content of the aforementioned method embodiments.

It should be understood that although various steps in the flowchart of the accompanying drawings are shown in sequence as indicated by arrows, these steps are not necessarily performed in the order indicated by the arrows. Unless explicitly stated in this article, the execution of these steps is not strictly limited in order, and they can be executed in other orders. Moreover, at least some of the steps in the flowchart of the accompanying drawings may include multiple sub-steps or multiple stages. These sub-steps or stages are not necessarily executed at the same time, but may be executed at different times. The execution order of these sub-steps or stages is also not necessarily sequential, and these sub-steps or stages may be performed in turn or alternately with other steps, sub-steps of other steps, or at least part of the stages.

It should be illustrated that the computer-readable storage medium mentioned above in the present disclosure may be a computer-readable signal medium or a computer-readable storage medium, or any combination of the above two. The computer-readable storage medium may be, for example, but is not limited to, an electrical, magnetic, optical, electromagnetic, infrared, or semiconductor system, apparatus or device, or any combination thereof. More specific examples of the computer-readable storage medium may include, but are not limited to, an electrical connection having one or more conductors, a portable computer disk, a hard drive, a random access memory (RAM), a read only memory (ROM), a removable programmable read-only memory (EPROM or flash memory), a fiber optic, a portable compact disk read-only memory (CD-ROM), an optical storage device, a magnetic storage device, or any suitable combination of the above. In the present disclosure, the computer-readable storage medium may be any tangible medium that contains or stores a program for use by or in combination with an instruction execution system, apparatus, or device. In the present disclosure, the computer-readable signal medium may include a data signal propagated in baseband or as part of a carrier wave, carrying computer-readable program code therein. Such propagated data signals may take a variety of forms, including but not limited to electromagnetic signals, optical signals, or any suitable combination of the above. The computer-readable signal medium may also be any computer-readable storage medium other than the computer-readable storage medium. The computer-readable signal medium may send, propagate, or transmit a program for use by or in combination with an instruction execution system, apparatus, or device. The program code included in the computer-readable storage medium may be transmitted by using any suitable medium, including but not limited to, wire, optical cable, radio frequency (RF), etc., or any suitable combination of the foregoing.

The above computer-readable storage medium may be included in the above-mentioned initiator or responder for WLAN sensing; it may also exist independently without being assembled into the initiator or responder for WLAN sensing.

The computer-readable storage medium carries one or more programs. When the one or more programs are executed by the initiator or responder for WLAN sensing, the initiator or responder executes the corresponding communication method.

According to one aspect of the present disclosure, a computer program product or computer program is provided. The computer program product or computer program includes computer instructions stored in a computer-readable storage medium. The processor of the computer device reads the computer instructions from the computer-readable storage medium, and the processor executes the computer instructions, so that the computer device executes the communication method provided in the above various optional implementations.

The computer program code for performing the operations of the present disclosure may be written in one or more programming languages or a combination thereof. The programming languages include object-oriented programming languages-such as Java, Smalltalk, C++, and conventional procedural programming language-such as "C" languages or a similar programming language. The program code may be executed entirely on the user computer, executed partly on the user computer, executed as a stand-alone software package, executed partly on the user computer and partly on a remote computer, or executed entirely on the remote computer or server. In situations involving the remote computer, the remote computer can be connected to the user computer through any kind of network, including a local area network (LAN) or a wide area network (WAN), or it can be connected to an external computer (such as connected through the internet by using an Internet service provider).

The flowcharts and block diagrams in the accompanying drawings illustrate the architectures, functions, and operations of possible implementations of systems, methods, and computer program products according to various embodiments of the present disclosure. In this regard, each block in the flowchart or block diagram may represent a module, a program segment, or a portion of code that contains one or more executable instructions for implementing the specified logic function. It should also be noted that, in some alternative implementations, the functions indicated in the blocks may also occur in a different order than those indicated in the accompanying diagram. For example, two blocks shown one after another may actually be executed substantially in parallel, or they may be sometimes executed in the reverse order, depending on the functions involved. It should also be noted that each block of the block diagrams and/or flowcharts, and combinations of blocks in the block diagrams and/or flowcharts, can be implemented by using dedicated hardware based systems that perform specified functions or operations, or can be implemented by using a combination of specialized hardware and computer instructions.

The modules involved in the embodiments of the present disclosure can be implemented by using software or hardware. In some embodiments, the name of a module does not constitute a limitation on the module itself under certain circumstances. For example, module A may also be described as "module A configured to perform operation B".

The above description is only a description of the preferred embodiments of the present disclosure and the technical principles applied. Those skilled in the art should understand that the disclosure scope involved in the present disclosure is not limited to technical solutions composed of specific combinations of the above technical features, but should also cover other technical solutions formed by any combination of the above technical features or equivalent features without departing from the concept of the present disclosure, such as a technical solution formed by replacing the above features with technical features with similar functions disclosed in the present disclosure (but not limited to this).

## Claims

1. A communication method, **characterized in** being applied to an initiator for wireless local area network (WLAN) sensing, and comprising:
determining a first message frame, wherein the first message frame comprises a sensing parameter field, and a bandwidth sub-field in the sensing parameter field is used for indicating that a bearer bandwidth of a null data packet (NDP) frame corresponding to the initiator to a responder (I2R) is 320 MHz; and
sending the first message frame.

2. The method according to claim 1, wherein the bandwidth sub-field further comprises at least one of:
an identification bit for indicating that the bearer bandwidth of the NDP frame corresponding to the I2R is 160 MHz;
an identification bit for indicating that the bearer bandwidth of the NDP frame corresponding to the I2R is 80 MHz;
an identification bit for indicating that the bearer bandwidth of the NDP frame corresponding to the I2R is 40 MHz; or
an identification bit for indicating that the bearer bandwidth of the NDP frame corresponding to the I2R is 20 MHz.

3. The method according to claim 1, wherein the sensing parameter field further comprises an I2R repetition sub-field, and the I2R repetition sub-field is used for indicating a maximum number of a long training field (LFT) comprised in the NDP frame corresponding to the I2R.

4. The method according to claim 1, wherein the sensing parameter field further comprises at least one of:
an identification bit for indicating a maximum number of a spatial stream (SS) used by the NDP frame corresponding to the I2R with a bandwidth less than 80 MHz, and an identification bit for indicating a maximum number of the SS used by the NDP frame corresponding to the I2R with the bandwidth greater than or equal to 80 MHz;
an identification bit for indicating a maximum number of an SS used by the NDP frame corresponding to the I2R with a bandwidth less than 80 MHz, an identification bit for indicating a maximum number of the SS used by the NDP frame corresponding to the I2R with the bandwidth greater than or equal to 80 MHz, and an identification bit for indicating a maximum number of the SS used by the NDP frame corresponding to the I2R with the bandwidth greater than or equal to 160 MHz; or
an identification bit for indicating a maximum number of an SS and a maximum number of a space time stream (STS) used by the NDP frame corresponding to the I2R with a bandwidth less than 80 MHz, and an identification bit for indicating a maximum number of the SS and a maximum number of the STS used by the NDP frame corresponding to the I2R with the bandwidth greater than or equal to 80 MHz.

5. The method according to claim 1, wherein the first message frame comprises a WLAN sensing parameter information element (IE), the WLAN sensing parameter IE comprises the sensing parameter field; and the WLAN sensing parameter IE further comprises at least one of:
a sub-IE field for indicating an identification of the WLAN sensing parameter IE;
a sub-IE field for indicating a length of the WLAN sensing parameter IE;
a sub-IE field for indicating that the WLAN sensing parameter IE comprises a parameter required for a triggered-based (TB) sensing mode or a parameter required for a non-triggered-based (Non-TB) sensing mode; or
a sub-IE field for indicating a parameter required for a TB sensing mode or a parameter required for a Non-TB sensing mode.

6. The method according to claim 1, wherein the first message frame is a WLAN sensing request frame.

7. A communication method, **characterized in** being applied to a responder for wireless local area network (WLAN) sensing, and comprising:
determining a second message frame, wherein the second message frame comprises a sensing parameter field, and a bandwidth sub-field in the sensing parameter field is used for indicating that a bearer bandwidth of a null data packet (NDP) frame corresponding to the responder to an initiator (R2I) is 320 MHz; and
sending the second message frame.

8. The method according to claim 7, wherein the bandwidth sub-field further comprises at least one of:
an identification bit for indicating that the bearer bandwidth of the NDP frame corresponding to the R2I is 160 MHz;
an identification bit for indicating that the bearer bandwidth of the NDP frame corresponding to the R2I is 80 MHz;
an identification bit for indicating that the bearer bandwidth of the NDP frame corresponding to the R2I is 40 MHz; or
an identification bit for indicating that the bearer bandwidth of the NDP frame corresponding to the R2I is 20 MHz.

9. The method according to claim 7, wherein the sensing parameter field further comprises an R2I repetition sub-field, and the R2I repetition sub-field is used for indicating a maximum number of a long training field (LFT) comprised in the NDP frame corresponding to the R2I.

10. The method according to claim 7, wherein the sensing parameter field further comprises at least one of:
an identification bit for indicating a maximum number of a spatial stream (SS) used by the NDP frame corresponding to the R2I with a bandwidth less than 80 MHz, and an identification bit for indicating a maximum number of the SS used by the NDP frame corresponding to the R2I with the bandwidth greater than or equal to 80 MHz;
an identification bit for indicating a maximum number of an SS used by the NDP frame corresponding to the R2I with a bandwidth less than 80 MHz, an identification bit for indicating a maximum number of the SS used by the NDP frame corresponding to the R2I with the bandwidth greater than or equal to 80 MHz, and an identification bit for indicating a maximum number of the SS used by the NDP frame corresponding to the R2I with the bandwidth greater than or equal to 160 MHz; or
an identification bit for indicating a maximum number of an SS and a maximum number of a space time stream (STS) used by the NDP frame corresponding to the R2I with a bandwidth less than 80 MHz, and an identification bit for indicating a maximum number of the SS and a maximum number of the STS used by the NDP frame corresponding to the R2I with the bandwidth greater than or equal to 80 MHz.

11. The method according to claim 7, wherein the second message frame comprises a WLAN sensing parameter information element (IE), the WLAN sensing parameter IE comprises the sensing parameter field; and the WLAN sensing parameter IE further comprises at least one of:
a sub-IE field for indicating an identification of the WLAN sensing parameter IE;
a sub-IE field for indicating a length of the WLAN sensing parameter IE;
a sub-IE field for indicating that the WLAN sensing parameter IE comprises a parameter required for a triggered-based (TB) sensing mode or a parameter required for a non-triggered-based (Non-TB) sensing mode; or
a sub-IE field for indicating a parameter required for a TB sensing mode or a parameter required for a Non-TB sensing mode.

12. The method according to claim 7, wherein the second message frame is a WLAN sensing response frame.

13. A communication device, **characterized in** comprising:
a first determining module, configured to determine a first message frame, wherein the first message frame comprises a sensing parameter field, and a bandwidth sub-field in the sensing parameter field is used for indicating that a bearer bandwidth of a null data packet (NDP) frame corresponding to an initiator to a responder (I2R) is 320 MHz; and
a first sending module, configured to send the first message frame.

14. A communication device, **characterized in** comprising:
a second determining module, configured to determine a second message frame, wherein the second message frame comprises a sensing parameter field, and a bandwidth sub-field in the sensing parameter field is used for indicating that a bearer bandwidth of a null data packet (NDP) frame corresponding to a responder to an initiator (R2I) is 320 MHz; and
a second sending module, configured to send the second message frame.

15. An initiator for wireless local area network (WLAN) sensing, **characterized in that** the initiator comprises a memory, a processor and a computer program stored in the memory and capable of being run on the processor, and the processor, when executing the computer program, implements the method of any one of claims 1 to 6.

16. A responder for wireless local area network (WLAN) sensing, **characterized in that** the responder comprises a memory, a processor and a computer program stored in the memory and capable of being run on the processor, and the processor, when executing the computer program, implements the method of any one of claims 7 to 12.

17. A computer-readable storage medium, **characterized in that** the computer-readable storage medium stores a computer program, and the computer program, when executed by a processor, implements the method of any one of claims 1 to 12.
